# EUROPÄISCHE PATENTSCHRIFT

(11) **EP 2 384 861 B1**
(45) Veröffentlichungstag und Bekanntmachung des Hinweises auf die Patenterteilung: **17.04.2013**
(21) Anmeldenummer: 11176451.0
(22) Anmeldetag: 12.02.2007
(51) Int. Cl.: B25D 17/08, B23B 31/107, B25B 23/00

(54) **Werkzeughalterung für einen Bohrhammer**
Tool holder for a hammer drill
Porte-outil pour un marteau perforateur

(30) Priorität: 10.04.2006 DE 102006016804
(43) Veröffentlichungstag der Anmeldung: 09.11.2011
(62) Teilanmeldung aus: 07704516.9
(73) Patentinhaber: Robert Bosch GmbH, 70442 Stuttgart (DE)
(72) Erfinder: Hild, Eugen, 72631 Aichtal (DE); Bohne, Ulrich, 72664 Kohlberg (DE)

(56) Entgegenhaltungen:
- WO-A-00/71287
- US-A- 5 193 824

## Beschreibung

Die Erfindung betrifft eine Werkzeughalterung für ein handgeführtes Bohrgerät, insbesondere für einen Bohrhammer, gemäß dem Oberbegriff des Anspruchs 1, sowie ein Bohrgerät mit einer solchen Werkzeughalterung gemäß dem Oberbegriff des Anspruchs 9.

### Stand der Technik

Im Unterschied zu Bohrmaschinen oder Schlagbohrmaschinen, wo der Schaftteil des verwendeten Einsatzwerkzeugs, zum Beispiel der mit einem kreisförmigen Querschnitt versehene Schaftteil eines Holz- oder Metallbohrers oder der mit einem hexagonalen Querschnitt versehene Schaftteil eines Schrauber-Bits, in einem mehrteiligen Spannfutter der Werkzeughalterung fest eingespannt wird, weisen Bohrhämmer eine Werkzeughalterung mit einer drehend antreibbaren, einstückig ausgebildeten Aufnahmehülse auf, die eine an beiden Stirnenden offene Ausnehmung zur Aufnahme des Schaftteils des verwendeten Einsatzwerkzeugs begrenzt. Zur axialen Verriegelung des Schaftteils in der auch als Hammerrohr bezeichneten Aufnahmehülse ist gewöhnlich eine Arretierkugel vorgesehen, die mittels eines die Aufnahmehülse umgebenden federbelasteten Verriegelungsrings hinter einer Hinterschneidung des Einsatzwerkzeug in Eingriff gebracht wird. Zur Drehmitnahme weist der Schaftteil des Einsatzwerkzeugs einen nichtzylindrischen Querschnitt auf, zum Beispiel bei dem sogenannten "SDS-Plus"-Profil zwei diametral entgegengesetzte, in Längsrichtung des Schaftteils verlaufende und zu seinem hinteren Stirnende hin offene Mitnahmenuten, mit denen beim Einführen des Einsatzwerkzeugs in die Ausnehmung komplementäre Mitnehmerstege auf der inneren Umfangsfläche der Aufnahmehülse in Eingriff treten.

Da das "SDS"-Plus-Profil nur für Einsatzwerkzeuge mit einem verhältnismäßig dicken Schaftteil geeignet ist, wurde vor kurzem das sogenannte "SDS-Mini"-Profil entwickelt, bei dem der zylindrische Schaftteil des Einsatzwerkzeugs, zum Beispiel eines Holz- oder Steinbohrers, einen geringeren Durchmesser aufweist und mit zwei diametral überstehenden Drehmitnahmestegen versehen ist, während die Aufnahmehülse der zugehörigen Werkzeughalterung zwei komplementäre Drehmitnehmernuten aufweist. Damit können auch die Abmessungen der Werkzeughalterung verringert werden, wodurch für eine Reihe von Anwendungen, zum Beispiel auf dem Heimwerkersektor, der Einsatz kleinerer Bohrhämmer an Stelle von Schlagbohrmaschinen an Attraktivität gewinnt. Wie bereits erwähnt, lassen sich die Werkzeughalterungen von Schlagbohrmaschinen jedoch bei Bedarf nicht nur mit Bohrwerkzeugen sondern auch mit unterschiedlichen Schrauber-Bits sowie mit neuerdings auf dem Markt erschienenen sogenannten HEX-Bohrern mit Sechskant-Schaft bestücken, was bei Werkzeughalterungen von Bohrhämmern bisher nur mit Hilfe zusätzlicher Adapter möglich ist.

Aus WO 00/71287 A ist ein Werkzeughalter gemäß dem Oberbegriff des Anspruchs 1 zur Aufnahme von Einsatzwerkzeugen mit im Quersachnitt hexagonalem Schaftteil bekannt, wobei die Aufnahmehülse darüber hinaus dazu ausgebildet ist, mit Einsatzwerkzeuge mit "Torx"-Profil bestückt zu werden. Der bekannte Werkzeughalter ist jedoch nicht dazu geignet, auch Einsatzwerkzeugen für Bohrhämmer bestückt zu werden.

### Vorteile der Erfindung

Demgegenüber bietet die erfindungsgemäße Werkzeughalterung mit den im Anspruch 1 genannten Merkmalen ohne Spannfutter, sowie ein mit einer solchen Werkzeughatterung bestücktes handgeführtes Bohrgerät gemäß Anspruch 9 den Vorteil, dass Einsatzwerkzeuge mit im Querschnitt hexagonalem Schaftteil, wie Schrauber-Bits oder sogenannte HEX-Bohrer, direkt in eine Aufnahmehülse eingesetzt werden können, die darüber hinaus mit anderen Einsatzwerkzeugen, mit einem Schaftteil mit "Torx"-Profil bestückt werden kann, vorzugsweise solchen, deren Mitnahmeflächen unter einem steilen Winkel zur Umfangsrichtung ausgerichtet sind.

Durch den Wegfall eines Adapters werden Kosten und Schnittstellen reduziert und durch letzteres auch eine gute Rundlaufqualität sichergestellt. Zudem wird die Bedienung für den Benutzer wesentlich vereinfacht, da alle Einsatzwerkzeuge auf dieselbe Weise eingesteckt und verriegelt werden.

Die erfindungsgemäße Lösung sieht vor, dass die Aufnahmehülse entlang ihrer inneren Umfangsfläche mit mindestens sechs ebenen Umfangsflächenabschnitten versehen wird, die mit jeweils benachbarten ebenen Umfangsflächenabschnitten einen Winkel von 120 Grad einschließen und damit parallel zu gegenüberliegenden Umfangsflächenabschnitten auf dem äußeren Umfang des in die Ausnehmung der Aufnahmehülse eingeführten, im Querschnitt hexagonalen Schaftteils ausgerichtet sind, wobei diese Umfangsflächenabschnitte oder ein Teil dieser Umfangsflächenabschnitte der Aufnahmehülse gegen die jeweils gegenüberliegenden Umfangsflächenabschnitte auf dem Schaftteil des Einsatzwerkzeugs angepresst werden und als Drehmitnehmer- bzw. Drehmomentübertragungsflächen wirken, wenn die Aufnahmehülse zusammen mit dem Einsatzwerkzeug in Drehung versetzt und ein Drehmoment von der Aufnahmehülse über diese Umfangsflächenabschnitte auf das Einsatzwerkzeug übertragen wird.

Zwischen den Umfangsflächenabschnitten oder zwischen Paaren der Umfangsflächenabschnitte, die zum Zusammenwirken mit der Umfangsfläche eines im Querschnitt hexagonalen Schaftteils vorgesehen sind, sind, andere Umfangsflächenabschnitte vorgesehen, die zum Zusammenwirken mit anderen Schaftteilen dienen, wie Umfangsflächenabschnitte, die mindestens sechs zur Drehachse rotationssymmetrische Drehmitnehmerrillen zur Aufnahme eines "Torx"-Profils aufweisen.

Der Erfindung liegt dabei der Gedanke zugrunde, dass infolge der ähnlichen Querschnittsabmessungen der Schaftteile von Einsatzwerkzeugen mit Sechskant-Profil, zum Beispiel der Größe 6,3 (1/4 Inch), wie Schrauber-Bits oder sogenannten HEX-Bohrern, und der Schaftteile von Einsatzwerkzeugen mit Torx-Profil, zum Beispiel der Größe T45, auch nach einer Überlagerung bzw. Kombination eines zur Aufnahme eines Sechskant-Profils geeigneten Querschnitts und eines zur Aufnahme eines Torx-Profils geeigneten Querschnitts eine ausreichend gute Drehmomentübertragung für beide Profile gewährleistet werden kann.

Erfindungsgemäß sind jeweils zwischen zwei Paaren von aneinandergrenzenden ebenen Umfangsflächenabschnitten insgesamt sechs Drehmitnehmerrillen zur Aufnahme der sechs Drehmitnahmerippen des Torx-Profils angeordnet.

Dann, wenn die Werkzeughalterung nur für Einsatzwerkzeuge mit Sechskant-Profil und mit Torx-Profil verwendet werden soll, können alternativ die in Umfangsrichtung benachbarten ebenen Umfangsflächenabschnitte für das Sechskant-Profil im Abstand voneinander und zwischen den überstehenden Drehmitnahmerippen des Torx-Profils angeordnet sein, wobei die Winkelabstände zwischen ihren Mittelinien 60 Grad oder ein Vielfaches von 60 Grad betragen. In diesem Fall sind die sechs Drehmitnehmerrillen zur Aufnahme der sechs Drehmitnahmerippen des Torx-Profils jeweils zwischen zwei benachbarten, im Abstand angeordneten ebenen Umfangsflächenabschnitten angeordnet.

Vorteilhafte Ausführungsformen sind Gegenstand der abhängigen Ansprüche.

### Zeichnungen

Die Erfindung wird nachfolgend in zwei Ausführungsbeispielen anhand der zugehörigen Zeichnungen näher erläutert. Es zeigen:
- die Figuren 1a - c:: eine perspektivische Ansicht, eine Längsseitenansicht und eine Stirnseitenansicht eines Schaftteils eines Schrauber-Bits mit Sechskant-Profil;
- die Figuren 2a - c:: eine perspektivische Ansicht, eine Längsseitenansicht und eine Stirnseitenansicht eines Schaftteils eines HEX-Bohrers mit Sechskant-Profil;
- die Figuren 3a - c:: eine perspektivische Ansicht, eine Längsseitenansicht und eine Stirnseitenansicht eines Schaftteils eines Bohrwerkzeugs mit SDS-Mini-Profil;
- Figur 4: eine Längsschnittansicht einer nicht-erfindungsgemäßen, für Schaftteile mit Sechskant-Profil und für Schaftteile mit SDS-Mini-Profil geeigneten Kombi-Werkzeughalterung eines handgeführten elektrischen Bohrhammers nach dem Einsetzen des HEX-Bohrers Bohrwerkzeugs aus den Figuren 2a-c;
- Figur 5: eine teilweise geschnittene Stirnseitenansicht eines Teils der nicht-erfindungsgemäßen Werkzeughalterung nach Fig. 4 nach dem Einsetzen des Schrauber-Bits aus den Figuren 1a - c;
- Figur 5a: einen vergrößerten Ausschnitt aus Figur 5;
- Figur 6: eine Längsschnittansicht der nicht-erfindungsgemäßen Werkzeughalterung nach Fig. 4 nach dem Einsetzendes "SDS-Mini"-Bohrwerkzeugs aus den Figuren 3a - c;
- Figur 7: eine teilweise geschnittene Stirnseitenansicht eines Teils der Werkzeughalterung nach Fig. 6 nach dem Einsetzen des "SDS-Mini"-Bohrwerkzeugs;
- Figur 8: eine perspektivische Ansicht einer Aufnahmehülse der der nicht-erfindungsgemäßen Werkzeughalterung nach Fig. 4;
- Figur 9: eine Querschnittsansicht der Aufnahmehülse nach Fig. 8 und einer Arretierkugel zur axialen Verriegelung des Werkzeugs;
- Figur 10 und 11: Querschnittsansichten einer erfindungsgemäßen, für Schaftteile mit Sechskant-Profil und für Schaftteile mit Torx-Profil geeigneten Kombi-Werkzeughalterung.

### Beschreibung der Ausführungsbeispiele

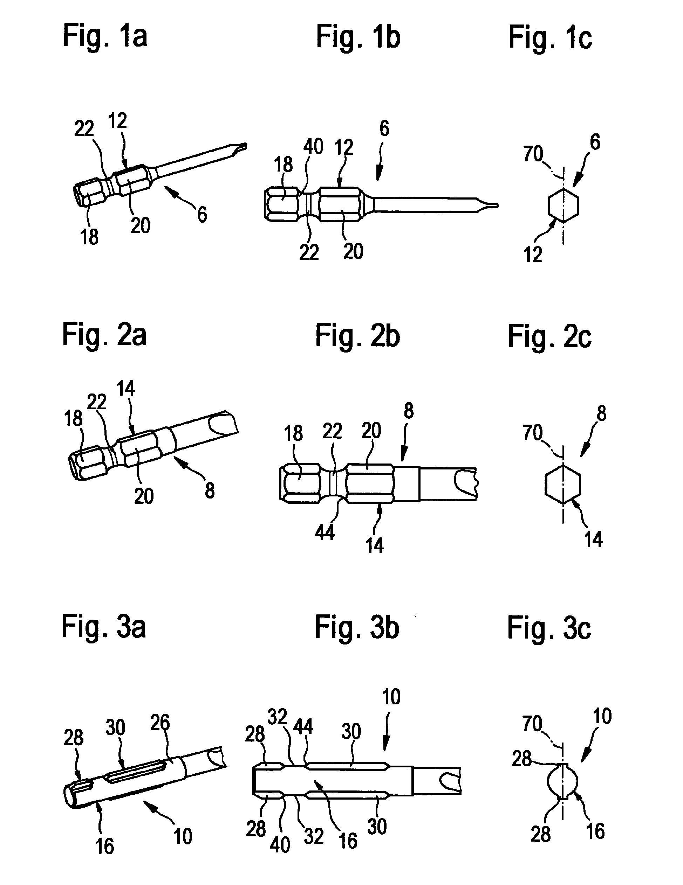

Der in der Zeichnung nur teilweise dargestellte handgeführte, elektrisch angetriebene Bohrhammer 2 weist eine Kombi-Werkzeughalterung 4 auf, die mit mehreren verschiedenen Einsatzwerkzeugen, zum Beispiel einem Schrauber-Bit 6, einem sogenannten HEX-Bohrer 8 oder einem sogenannten "SDS-Mini"-Bohrer 10 bestückt werden kann. Diese Einsatzwerkzeuge 6, 8, 10 weisen jeweils mehrere Arten von unterschiedlich geformten Schaftteilen 12, 14, 16 auf, zum Beispiel einen in den Figuren 1a - c oder 2a - c dargestellten Schaftteil 12 bzw. 14 mit Sechskant-Profil und einen in den Figuren 3a - c dargestellten Schaftteil 16 mit "SDS-Mini"-Profil. Dadurch lässt sich der Bohrhammer 2 ohne die Notwendigkeit eines Adapters sowohl zum Bohren mit oder ohne Schlag und auch zum Schrauben einsetzen, nachdem das jeweils passende Einsatzwerkzeug 6, 8, 10 in die Werkzeughalterung 4 eingeführt und in dieser verriegelt worden ist.

Bei dem Schrauber-Bit 6 in den Figuren 1a - c und bei dem HEX-Bohrer 8 in den Figuren 2a - c weist der Schaftteil 12 bzw. 14 zwei im Abstand angeordnete unterschiedlich lange Abschnitte 18, 20 mit einem regelmäßigen hexagonalen Querschnitt auf, die durch eine genormte Umfangsnut 22 mit einem konkaven gerundeten Querschnitt getrennt sind. Bei dem "SDS-Mini"-Bohrer 12 in den Figuren 3a - c weist der Schaftteil 16 bei 26 einen zylindrischen Querschnitt und an diametral entgegengesetzten Seiten des Querschnitts jeweils einen kürzeren hinteren Mitnahmesteg 28 und einen längeren vorderen Mitnahmesteg 30 zum drehenden Antreiben des Bohrers 12 und zur Drehmomentübertragung auf, die jeweils durch eine Unterbrechung 32 getrennt sind.

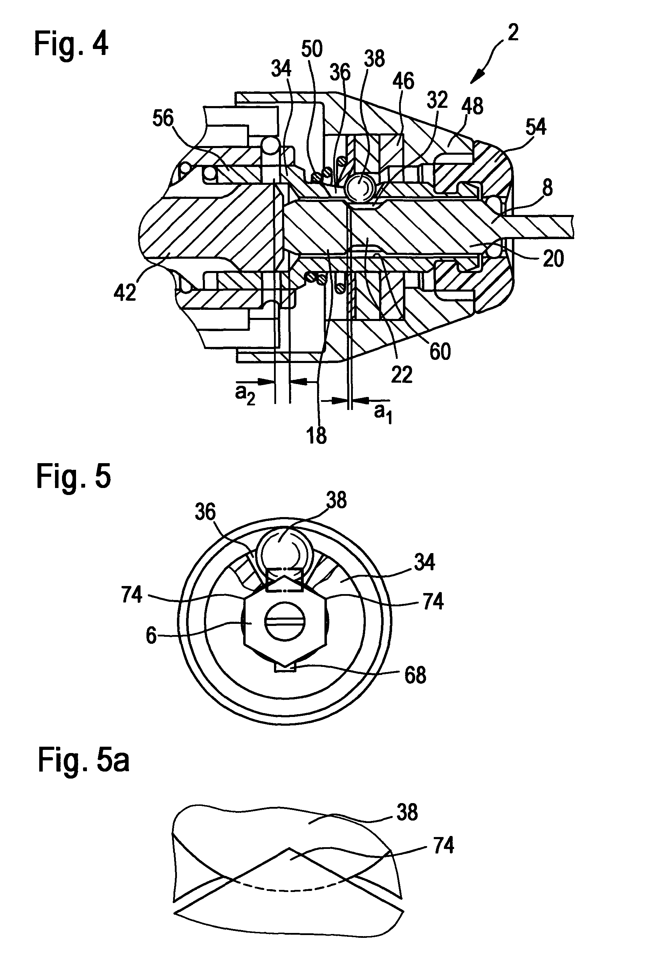

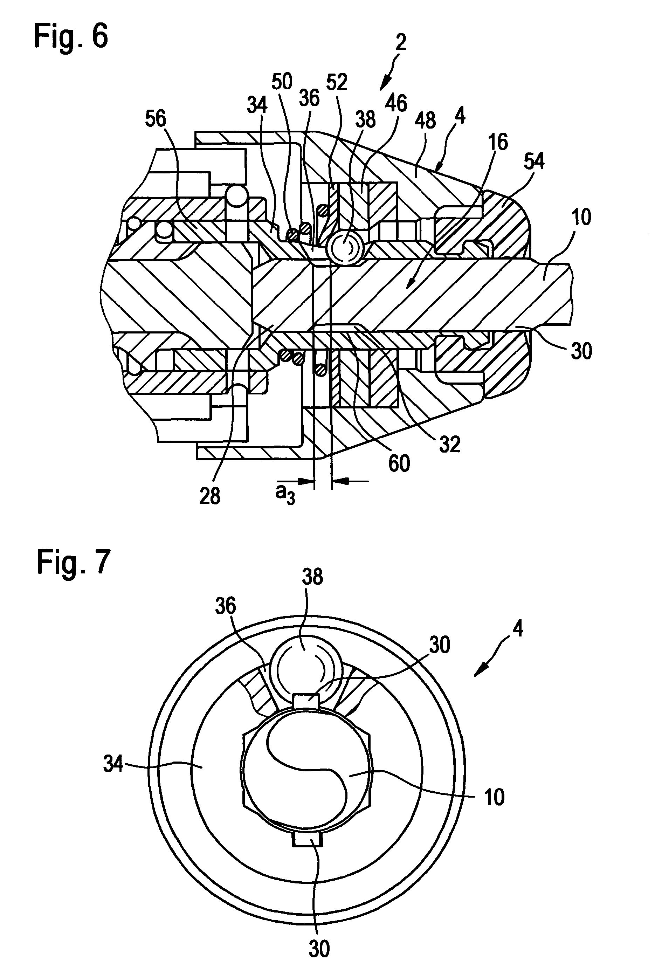

Wie am besten in den Figuren 4 und 6 dargestellt, umfasst die Werkzeughalterung 4 in nach dem Stand der Technik bekannter Weise ein an beiden Stirnenden offenes Hammerrohr 34, das im Unterschied zu einem Spannfutter vorzugsweise einteilig ausgebildet ist und von einer Antriebsspindel (nicht dargestellt) des Bohrhammers 2 drehend um seine Längsachse an- , getrieben wird. Das Hammerrohr 34 weist an seiner Oberseite eine Aussparung 36 auf, durch die eine Verriegelungskugel 38 einer Verriegelungseinrichtung zur axialen Verriegelung des Einsatzwerkzeugs 6, 8, 10 im Hammerrohr 34 mit der Nut 22 des in das Hammerrohr 34 eingeführten Schaftteils 12, 14 des Werkzeugs 6, 8 (Fig. 4, 5 und 5a) bzw. mit einer der beiden Unterbrechungen 32 des Schaftteils 16 des Werkzeugs 10 (Fig. 6 und 7) in Eingriff gebracht werden kann. Die Position der Nut 22 beim Schrauber-Bit 6 und beim Bohrer 8 ist so gewählt, dass die Kugel 38 in Bezug zu einer vorderen Schulter 40 des Abschnitts 18 so angeordnet ist, dass das Schrauber-Bit 6 und der Bohrer 8 mit minimalem axialem Spiel a₁ im Hammerrohr 34 festgehalten werden, wie in Fig. 4 dargestellt, wenn der Schaftteil 12 des Schrauber-Bits 6 gegen einen Döpper oder Schlagbolzen 42 des Bohrhammers 2 anschlägt, der selbst ein axiales Spiel a₂ besitzt. Demgegenüber ist die Kugel 38 nach dem Einsetzen des SDS-Bohrers 10 in der Nähe einer hinteren Schulter 44 des vorderen Mitnahmestegs 30 angeordnet, wie in Fig. 6 dargestellt, so dass beim Schlagbohren zwischen der vorderen Schulter 40 des hinteren Mitnahmestegs 28 und der Kugel 38 ein ausreichendes Axialspiel a₃ für eine ungehinderte Schlagübertragung gewährleistet ist.

Die Aussparung 36 weist einen konischen Querschnitt auf, der einen vollständigen Eintritt der Kugel 38 ins Innere des Hammerrohrs 34 verhindert. Die Kugel 38 wird in der Aussparung 36 von einem Schließring 46 festgehalten, der das Hammerrohr 34 in Umfangsrichtung umgibt und mittels einer das Gehäuse der Werkzeughalterung 4 bildenden Betätigungshülse 48 entgegen der Kraft einer Verriegelungsfeder 50 in Bezug zum Hammerrohr 34 axial nach hinten verschiebbar ist, um das Einsatzwerkzeug 6, 8, 10 vor einer Entnahme freizugeben bzw. zu entriegeln. Zwischen den Schließring 46 und die Verriegelungsfeder 50 ist ein Halteblech 52 eingesetzt, das sich beim Einführen des Einsatzwerkzeugs 6, 8, 10 ins Hammerrohr 34 entgegen der Kraft der Feder 50 verschiebt und dadurch zulässt, dass sich die Kugel 38 von der Längsachse des Hammerrohrs 34 weg nach außen bewegt, bis sich die Nut 22 bzw. die Unterbrechung 32 am Schaftteil 12, 14 bzw. 16 unter die Aussparung 36 schiebt und die Kugel 38 vom Halteblech 52 in die Nut 22 bzw. Unterbrechung 32 gedrückt wird. An seinem vorderen, in Arbeitsrichtung weisenden Stirnende trägt das Hammerrohr 34 eine aus einem gummielastischen Material bestehende Staubschutzkappe 54, die über das vordere Stirnende des Hammerrohrs 34 übersteht. Der Döpper 42 ist innerhalb eines hinteren Teils 54 des Hammerrohrs 34 axial beweglich geführt.

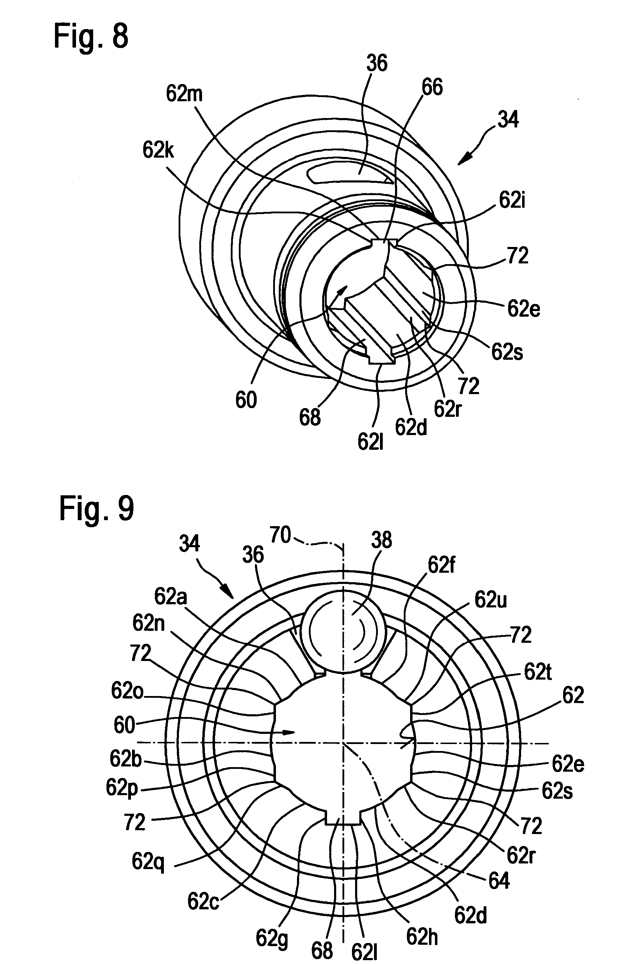

Wie am besten in Fig. 9 dargestellt, weist bei der bekannten Werkzeughalterung aus den Figuren 1 bis 9 eine zur Aufnahme der Schaftteile 12, 14, 16 der Werkzeuge 6, 8, 10 dienende, die Drehachse umgebende Ausnehmung 60 des Hammerrohrs 34 eine innere Umfangsfläche 62 auf, die in Umfangsrichtung in eine Mehrzahl von Umfangsflächenabschnitten 62a bis 62u unterteilt ist. Diese Umfangsflächenabschnitte 62a bis 62u umfassen sechs teilzylindrische Umfangsflächenabschnitte 62a bis 62f und insgesamt vierzehn ebene Umfangsflächenabschnitte 62g bis 62u.

Ein von den sechs teilzylindrischen Umfangsflächenabschnitten 62a bis 62f aufgespannter gedachter Zylinder weist eine mit der Drehachse 64 zusammenfallende Mittelachse und einen dem Radius einer zylindrischen Umfangsfläche des Schaftteils 16 mit "SDS-Mini"-Profil entsprechenden Radius auf, so dass die Umfangsflächenabschnitte 62a bis 62f dieser Umfangsfläche nach dem Einführen des Schaftteils 16 in das Hammerrohr 34 im Wesentlichen spielfrei gegenüberliegen. Die Mitten der Umfangsflächenabschnitte 62a bis 62f sind jeweils in gleichen Winkelabständen von 60 Grad um die Drehachse 64 verteilt.

Sechs der vierzehn ebenen Umfangsflächenabschnitte 62g bis 62m begrenzen zwei diametral gegenüberliegende Mitnehmernuten 66, 68, die zur Aufnahme der Mitnahmestege 28, 30 der Schaftteile 16 mit "SDS-Mini"-Profil dienen, entsprechende Querschnittsabmessungen wie die Mitnahmestege 28, 30 aufweisen und jeweils von zwei parallelen Flanken 62g, 62h bzw. 62i, 62k und einem zu diesen senkrechten Nutgrund 62i bzw. 62m begrenzt werden, wobei sich die Flanken 62g bis 62k jeweils von benachbarten teilzylindrischen Umfangsflächenabschnitten 62a bis 62f aus nach außen erstrecken. Die Nuten 66, 68 sind so ausgerichtet, dass eine davon mittig durch die Aussparung 36 des Hammerrohrs 34 verläuft.

Die übrigen acht ebenen Umfangsflächenabschnitte 62n bis 62u sind spiegelsymmetrisch beiderseits einer durch die Mitten der Nuten 66, 68 verlaufenden Ebene 70 angeordnet und grenzen an vier Scheitellinien 72 jeweils paarweise unter einem Innenwinkel von 120 Grad aneinander. Die Winkelabstände zwischen den vier Scheitellinien 72 sind äquivalent zu den Winkelabständen der entsprechenden Kanten des Sechskant-Profils der Schaftteile 12, 14 und betragen jeweils 60 Grad oder ein Vielfaches von 60 Grad. Die Scheitellinien 72 spannen einen gedachten, zur Drehachse 64 koaxialen Zylinder auf, dessen Durchmesser größer als der Durchmesser des gedachten, von den teilzylindrischen Umfangsflächenabschnitten 62a bis 62f aufgespannten Zylinders ist, während das Schlüsselmaß eines gedachten, von den acht ebenen Umfangsflächenabschnitten 62n bis 62u aufgespannten Außensechskants kleiner als der Durchmesser dieses letzteren Zylinders ist. Der gedachte Außensechskant weist zwei zur Ebene 70 parallele Flächen auf, so dass die Kugel 38 eine Ecke 74 des Sechskant-Profils des Werkzeugs 6, 8 hintergreift, wie in Fig. 5a dargestellt

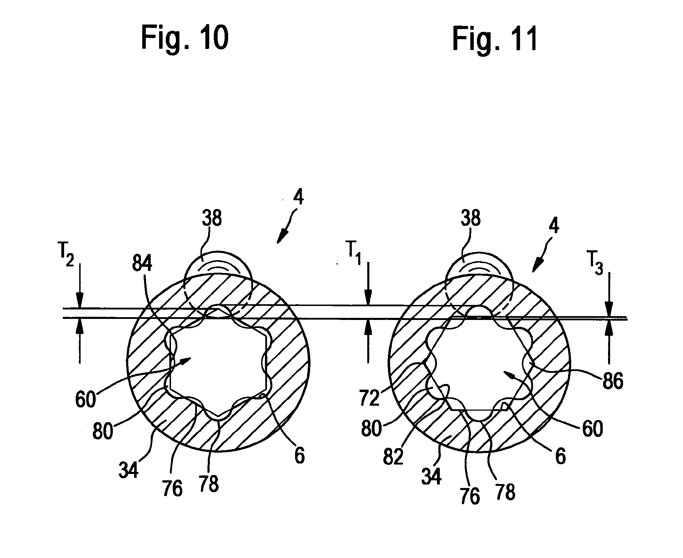

Die Figuren 10 und 11 zeigen jeweils einen Teil zweier erfindungsgemäßer Werkzeughalterungen 4, bei denen der Querschnitt der Ausnehmung 60 des Hammerrohrs 34 durch Überlagerung eines Sechskant-Querschnitts 76 der Größe 6,3 (3/4 Inch) und eines Torx-Profils 78 der Größe T45 gebildet wird. Während bei dem Hammerrohr 34 in Fig. 10 die Ecken des Sechskant-Profils 76 mit Mitnehmerrillen 80 zur Aufnahme von komplementären Mitnahmerippen des Torx-Profils 78 zusammenfallen, stehen bei dem Hammerrohr in Fig. 11 die Mitnehmerrillen 80 des Torx-Profils 78 über die Mitten der Schlüsselflächen 82 des Sechskant-Profils 76 über. Bei der Konfiguration aus Fig. 10 ist günstig, dass die Verriegelungstiefen T1 und T2 beider Profile 76, 78 ähnlich sind, während die ebenen Führungs- und Mitnahmeflächen 84 für den Sechskant 76 ungünstig sind, während bei der Konfiguration aus Fig. 11 die Führungs- und Mitnahmeflächen 86 für den Sechskant 76 optimal sind, jedoch die Verriegelungstiefen T1 und T3 beider Profile 76, 78 sehr unterschiedlich sind.

Beide Werkzeughalterungen 4 eignen sich jeweils auch zur Aufnahme von Einsatzwerkzeugen, deren Schaftteil zwar ein Sechskant-Profil, jedoch keine Nut 22 besitzt. In diesem Fall werden die Werkzeuge jedoch nicht axial verriegelt.

## Patentansprüche

1. Werkzeughalterung für ein handgeführtes Bohrgerät, insbesondere für einen Bohrhammer, mit einer insbesondere einstückig ausgebildeten, drehend antreibbaren Aufnahmehülse mit einer Ausnehmung für einen Schaftteil eines Einsatzwerkzeugs, wobei die Ausnehmung an beiden Stirnenden offen ist und dazwischen von einer inneren Umfangsfläche der Aufnahmehülse begrenzt wird, wobei die innere Umfangsfläche der Aufnahmehülse (34) in Umfangsrichtung mindestens sechs ebene Umfangsflächenabschnitte (84, 86) aufweist, wobei jeweils benachbarte Umfangsflächenabschnitte einen Winkel von 120 Grad einschließen, und sechs zur Drehachse (64) der Aufnahmehülse (34) parallele, in gleichen Winkelabständen angeordnete Drehmitnehmerrillen (80) für einen Schaftteil mit Torx-Profil aufweist, **dadurch gekennzeichnet, dass** die Drehmitnehmerrillen (80) jeweils zwischen zwei benachbarten, im Abstand angeordneten ebenen Umfangsflächenabschnitten (84) angeordnet sind oder die Drehmitnehmerrillen (80) jeweils zwischen zwei Paaren von aneinandergrenzenden ebenen Umfangsflächenabschnitten (86) angeordnet sind.

2. Werkzeughalterung nach Anspruch 1, **dadurch gekennzeichnet, dass** die in Umfangsrichtung benachbarten ebenen Umfangsflächenabschnitte (86) paarweise entlang von Scheitellinien (72) aneinandergrenzen, wobei die Winkelabstände zwischen den Scheitellinien (72) 60 Grad oder ein Vielfaches von 60 Grad betragen.

3. Werkzeughalterung nach Anspruch 1, **dadurch gekennzeichnet, dass** die in Umfangsrichtung benachbarten ebenen Umfangsflächenabschnitte (84) im Abstand voneinander angeordnet sind, wobei die Winkelabstände zwischen ihren Mittelinien 60 Grad oder ein Vielfaches von 60 Grad betragen.

4. Werkzeughalterung nach einem der vorangehenden Ansprüche, **dadurch gekennzeichnet, dass** die innere Umfangsfläche der Aufnahmehülse (34) mindestens eine zur Drehachse der Aufnahmehülse (34) parallele Drehmitnehmernut für einen Schaftteil mit kreisförmigem Querschnitt und mindestens einem überstehenden Drehmitnahmesteg begrenzt.

5. Werkzeughalterung nach Anspruch 4, **dadurch gekennzeichnet, dass** die Drehmitnehmernut von zwei gegenüberliegenden, im Wesentlichen parallelen Umfangsflächenabschnitten oder Flanken und einem zu den Umfangsflächenabschnitten oder Flanken im Wesentlichen senkrechten Umfangsflächenabschnitt oder Nutgrund der inneren Umfangsfläche begrenzt wird.

6. Werkzeughalterung nach einem der vorangehenden Ansprüche, **dadurch gekennzeichnet, dass** die innere Umfangsfläche der Aufnahmehülse (34) mehrere teilzylindrische Umfangsflächenabschnitte umfasst, wobei die in Umfangsrichtung benachbarten teilzylindrische Umfangsflächenabschnitte jeweils durch ein Paar ebene Umfangsflächenabschnitte oder durch eine Drehmitnehmernut getrennt sind.

7. Werkzeughalterung nach einem der vorangehenden Ansprüche, **gekennzeichnet durch** eine Verriegelungseinrichtung (36, 38, 46, 50) zur axialen Verriegelung von im Querschnitt unterschiedlichen Schaftteilen (12, 14) der Einsatzwerkzeuge (6, 8) in der Aufnahmehülse (34).

8. Werkzeughalterung nach Anspruch 7, **dadurch gekennzeichnet, dass** die Verriegelungseinrichtung (36, 38, 46, 50) ein Verriegelungselement (38) umfasst, das eine Ecke (74) eines Schaftteils (12, 14) mit Sechskant-Profil hintergreift.

9. Handgeführtes Bohrgerät, insbesondere Bohrhammer, **gekennzeichnet durch** eine Werkzeughalterung (4) nach einem der vorangehenden Ansprüche.

## Claims

1. Tool holder for a hand-held drilling implement, in particular for a hammer drill, comprising a rotationally drivable accommodating sleeve which is in particular of one-piece design and has an aperture for a shank part of an application tool, wherein the aperture is open at both front ends and is defined in between by an inner circumferential surface of the accommodating sleeve, wherein the inner circumferential surface of the accommodating sleeve (34) has at least six flat circumferential surface sections (84, 86) in the circumferential direction, wherein in each case adjacent circumferential surface sections enclose an angle of 120 degrees, and has six rotary driving channels (80) for a shank part having a Torx profile which are parallel to the rotation axis (64) of the accommodating sleeve (34) and are arranged at equal angular distances apart, **characterized in that** the rotary driving channels (80) are in each case arranged between two adjacent, flat circumferential surface sections (84) arranged at a distance apart or the rotary driving channels (80) are in each case arranged between two pairs of flat circumferential surface sections (86) adjoining one another.

2. Tool holder according to Claim 1, **characterized in that** the flat circumferential surface sections (86) which are adjacent in the circumferential direction adjoin one another in pairs along apex lines (72), wherein the angular distances between the apex lines (72) are 60 degrees or a multiple of 60 degrees.

3. Tool holder according to Claim 1, **characterized in that** the flat circumferential surface sections (84) which are adjacent in the circumferential direction are arranged at a distance from one another, wherein the angular distances between their centre lines are 60 degrees or a multiple of 60 degrees.

4. Tool holder according to one of the preceding claims, **characterized in that** the inner circumferential surface of the accommodating sleeve (34) defines at least one rotary driving groove, parallel to the rotation axis of the accommodating sleeve (34), for a shank part having a circular cross section and at least one projecting rotary driving web.

5. Tool holder according to Claim 4, **characterized in that** the rotary driving groove is defined by two opposite, substantially parallel circumferential surface sections or flanks and a circumferential surface section or groove root of the inner circumferential surface, said circumferential surface section or groove root being substantially perpendicular to the circumferential surface sections or flanks.

6. Tool holder according to one of the preceding claims, **characterized in that** the inner circumferential surface of the accommodating sleeve (34) comprises a plurality of partly cylindrical circumferential surface sections, wherein the partly cylindrical circumferential surface sections which are adjacent in the circumferential direction are in each case separated by a pair of flat circumferential surface sections or by a rotary driving groove.

7. Tool holder according to one of the preceding claims, **characterized by** a locking device (36, 38, 46, 50) for axially locking shank parts (12, 14) of the application tools (6, 8) in the accommodating sleeve (34), said shank parts (12, 14) being different in cross section.

8. Tool holder according to Claim 7, **characterized in that** the locking device (36, 38, 46, 50) comprises a locking element (38) which engages behind a corner (74) of a shank part (12, 14) having a hexagonal profile.

9. Hand-held drilling implement, in particular a hammer drill, **characterized by** a tool holder (4) according to one of the preceding claims.

## Revendications

1. Porte-outil pour une perceuse manuelle, en particulier un marteau perforateur, comprenant un manchon de réception pouvant être entraîné en rotation, réalisé notamment d'une seule pièce, avec un évidement pour une partie de tige d'un outil à insérer, l'évidement étant ouvert aux deux extrémités frontales et étant limité entre celles-ci par une surface périphérique intérieure du manchon de réception, la surface périphérique intérieure du manchon de réception (34) présentant, dans la direction périphérique, au moins six portions de surface périphérique planes (84, 86), chacune des portions de surface périphérique adjacentes formant un angle de 120 degrés, et six gorges d'entraînement en rotation (80) disposées suivant des écarts angulaires égaux et parallèles à l'axe de rotation (64) du manchon de réception (34), pour une partie de tige de profil Torx, **caractérisé en ce que** les gorges d'entraînement en rotation (80) sont à chaque fois disposées entre deux portions de surface périphérique planes adjacentes (84), espacées l'une de l'autre, ou les gorges d'entraînement en rotation (80) sont à chaque fois disposées entre deux paires de portions de surface périphérique planes adjacentes (86).

2. Porte-outil selon la revendication 1, **caractérisé en ce que** les portions de surface périphérique planes (86) adjacentes dans la direction périphérique sont adjacentes les unes aux autres par paires le long de lignes de sommet (72), les écarts angulaires entre les lignes de sommet (72) étant de 60 degrés ou un multiple de 60 degrés.

3. Porte-outil selon la revendication 1, **caractérisé en ce que** les portions de surface périphérique planes (84) adjacentes dans la direction périphérique sont disposées à distance les unes des autres, les écarts angulaires entre leurs lignes de sommet valant 60 degrés ou un multiple de 60 degrés.

4. Porte-outil selon l'une quelconque des revendications précédentes, **caractérisé en ce que** la surface périphérique intérieure du manchon de réception (34) limite au moins une rainure d'entraînement en rotation parallèle à l'axe de rotation du manchon de réception (34), pour une partie de tige de section transversale circulaire et ayant au moins une nervure d'entraînement en rotation saillante.

5. Porte-outil selon la revendication 4, **caractérisé en ce que** la rainure d'entraînement en rotation est limitée par deux portions de surface périphérique ou flancs sensiblement parallèles, opposés, et par une portion de surface périphérique ou base de rainure de la surface périphérique intérieure, sensiblement perpendiculaire par rapport aux portions de surface périphérique ou flancs.

6. Porte-outil selon l'une quelconque des revendications précédentes, **caractérisé en ce que** la surface périphérique intérieure du manchon de réception (34) comprend plusieurs portions de surface périphérique partiellement cylindriques, les portions de surface périphérique partiellement cylindriques adjacentes dans la direction périphérique étant séparées à chaque fois par une paire de portions de surface périphérique planes ou par une rainure d'entraînement en rotation.

7. Porte-outil selon l'une quelconque des revendications précédentes, **caractérisé par** un dispositif de verrouillage (36, 38, 46, 50) pour le verrouillage axial de parties de tige de sections transversales différentes (12, 14) des outils à insérer (6, 8) dans le manchon de réception (34).

8. Porte-outil selon la revendication 7, **caractérisé en ce que** le dispositif de verrouillage (36, 38, 46, 50) comprend un élément de verrouillage (38) qui vient en prise par l'arrière avec un coin (74) d'une partie de tige (12, 14) de profilé hexagonal.

9. Perceuse manuelle, en particulier marteau perforateur, caractérisé(e) par un porte-outil (4) selon l'une quelconque des revendications précédentes.
